# EUROPEAN PATENT APPLICATION

(11) **EP 3 281 738 A1**
(43) Date of publication of application: **14.02.2018**
(21) Application number: 16776248.3
(22) Date of filing: 10.03.2016
(51) Int. Cl.: B23K 35/363, B23K 35/26, C22C 13/00, B23K 35/362, B23K 35/36, B23K 35/02

(54) **FLUX FOR SOLDERING, AND SOLDERING PASTE COMPOSITION INCLUDING SAME**

(30) Priority: 08.04.2015 JP 2015078876
(71) Applicant: Panasonic Intellectual Property Management Co., Ltd., Osaka-shi, Osaka 540-6207 (JP)
(72) Inventor: HINE, Kiyohiro, Osaka-shi Osaka 540-6207 (JP); FURUSAWA, Akio, Osaka-shi Osaka 540-6207 (JP); AKIYAMA, Shinnosuke, Osaka-shi Osaka 540-6207 (JP)
(74) Representative: Vigand, Philippe
(86) International application number: PCT/JP2016/001329
(87) International publication number: WO 2016/163070

(57) **Abstract**

Provided is a flux for soldering that can suppress a crack in a flux residue even if the flux for soldering is exposed to a cooling and heating cycle at the highest temperature of 150°C such as the inside of an engine room of automobiles for a long period of time, and a soldering paste composition including the flux for soldering. The flux for soldering includes a synthetic resin, an activator, an organic solvent, and a thixotropic agent, in which synthetic resin contains a triblock copolymer of methacrylic acid ester with acrylic acid ester configured of a linear alkyl moiety having 3 to 6 carbon atoms. In addition, a soldering paste composition including the flux for soldering is used.

## Description

### TECHNICAL FIELD

The present invention relates to a flux for soldering used when coupling an electronic component to a circuit board of electronic equipment by soldering, and a soldering paste composition including the flux for soldering.

### BACKGROUND ART

Various soldering paste compositions including the flux for soldering and a solder powder is used when the electronic component is mounted on a circuit board. Among these, the flux for soldering plays a role of removing metal oxides existing on the circuit board, preventing oxidization caused from a solder being in contact with air at the time of coupling, and enhancing wettability by decreasing a surface tension. In general, the flux for soldering includes a synthetic resin, which is a base agent, an activator, an organic solvent, and a thixotropic agent.

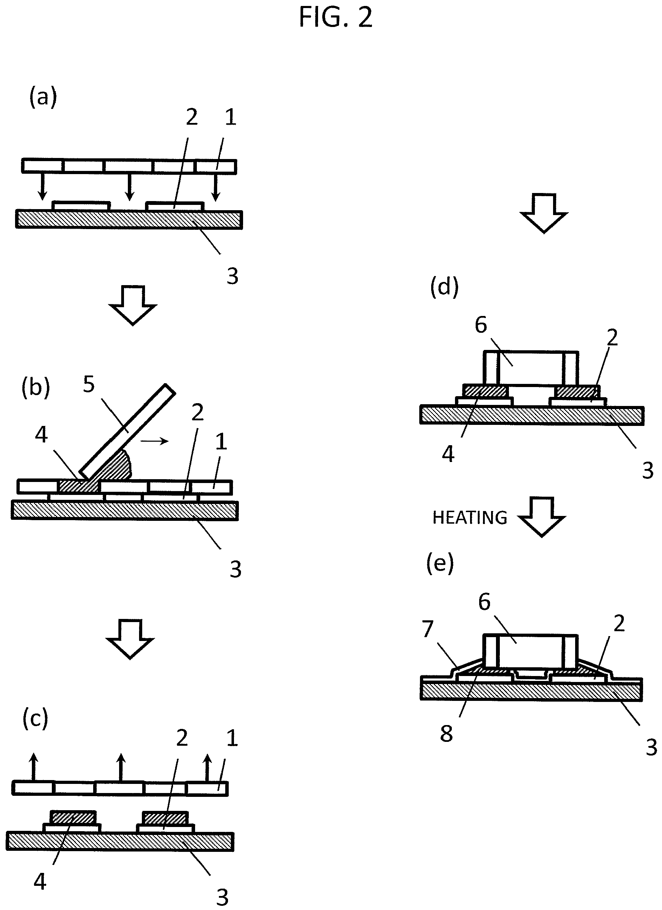

In order to mount the electronic component, it is necessary to supply a soldering paste composition to a circuit board electrode on the circuit board. Fig. 2 illustrates a step of supplying the soldering paste composition to the circuit board electrode and coupling the circuit board electrode and the electronic component by soldering.

First, screen mask 1 along the shape of circuit board electrode 2 is disposed on circuit board 3 (Fig. 2(a)), and soldering paste composition 4 is supplied on circuit board electrode 2 using squeegee 5 (Fig. 2(b)). Thereafter, screen mask 1 is taken off (Fig. 2(c)) and electronic component 6 is placed on circuit board electrode 2 (Fig. 2(d)).

By heating this circuit board 3 within a reflow oven, soldering paste composition 4 is melted and electronic component 6 is coupled on circuit board electrode 2 by solder 8. On circuit board 3 and solder 8 which have been soldered by soldering paste composition 4, flux residue 7 in which a flux component included in soldering paste composition 4 has become a film is generated.

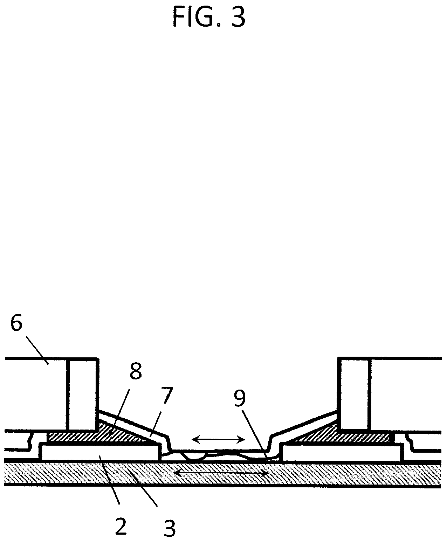

In a case where circuit board 3 on which electronic component 6 is mounted in this way is disposed in an engine room of automobiles or the like, a crack is generated in flux residue 7 by a thermal stress applied to circuit board 3. Fig. 3 illustrates a circuit board in which a crack is generated on a flux residue. Reference numeral 9 represents a crack. For circuit board 3 placed within the engine room, high reliability is required under a severe cooling and heating cycle condition, which is from -40°C to 150°C.

However, in an environment in which the temperature variation is drastic, serious problems occur in that crack 9 is likely to be generated on flux residue 7 and infiltration of moisture through this crack 9 causes a short circuit between circuit board electrodes 2 or corrosion of circuit board electrodes 2.

For the conventional flux for soldering in order to suppress such crack 9 on flux residue 7 and the soldering paste composition including the same, a synthetic resin having a low glass transition temperature from -30 °C to -100°C is used as a resin component included in the flux for soldering (refer to PTL 1).

### Citation List

### Patent Literature

PLT 1: Japanese Patent Unexamined Publication No. 2013-071152

### SUMMARY OF THE INVENTION

For the conventional flux for soldering, a synthetic resin having a low glass transition temperature is used, and the glass transition temperature of the soldering paste composition can be lowered. Accordingly, it is possible to suppress a crack in the flux residue under a condition of a cooling and heating cycle, which is low temperature.

However, it is considered that the synthetic resin in the flux residue needs to be uniformly dispersed in order to suppress a crack in the flux residue over the temperature range from -40°C to 150°C which is demanded for the circuit board within an engine room of automobiles. PTL 1 does not clearly disclose a type or a polymerization method of the synthetic resin, and the synthetic resin component cannot be uniformly dispersed within the flux residue by simply mixing the synthetic resin.

Therefore, as the flux residue generated in a case of using the conventional soldering paste composition is repeatedly exposed to a severe environment, which is from -40°C to 150°C, such as an engine room of automobiles, the flux residue cannot bear thermal expansion or contraction applied to the circuit board and a crack is partially generated.

The present invention is to solve the conventional problem and an object thereof is to provide a flux for soldering which can suppress a crack in a flux residue since the flux has excellent resistance under low and high temperature, even if the flux is exposed under a cooling and heating cycle for a long period of time, and a soldering paste composition including the flux for soldering.

In order to solve the aforementioned problem, the flux for soldering of the present invention contains a synthetic resin, an activator, an organic solvent, and a thixotropic agent, and the synthetic resin contains a triblock copolymer of methacrylic acid ester having a glass transition point of 100°C or higher with acrylic acid ester configured of a linear alkyl moiety having 3 to 6 carbon atoms.

In addition, the soldering paste composition of the present invention contains the aforementioned flux for soldering and a solder alloy powder.

As the synthetic resin of the triblock copolymer is contained in the flux for soldering as the aforementioned configuration, methacrylic acid ester having rigidity and acrylic acid ester having flexibility can be uniformly dispersed in the flux residue generated after soldering the soldering paste composition on the circuit board electrode.

Therefore, according to the flux for soldering of the present invention and the soldering paste composition including the flux for soldering, even if the circuit board with the electronic component mounted thereon is repeatedly exposed under a cooling and heating cycle, it is possible to suppress a crack in the flux residue.

### BRIEF DESCRIPTION OF DRAWINGS

FIG. 1 is a diagram illustrating a step of supplying a soldering paste composition to a circuit board electrode and heating the composition within a reflow oven.
FIG. 2 is a diagram illustrating a step of supplying the soldering paste composition to the circuit board electrode to couple the circuit board electrode with an electronic component by soldering.
FIG. 3 is a diagram illustrating a circuit board in which a crack is generated on a flux residue.

### DESCRIPTION OF EMBODIMENT

### (Embodiment 1)

Hereinafter, an embodiment of the present invention will be described. The soldering paste composition of the present invention is configured to include a flux for soldering and a solder alloy powder. First, the flux for soldering will be described in detail using a specific embodiment. The flux for soldering is configured to include a synthetic resin, an activator, an organic solvent, and a thixotropic agent.

### (Synthetic resin)

The synthetic resin used for the flux for soldering of the present invention is an acrylic block copolymer including a methacrylic acid ester unit (A) which is a rigid component and an acrylic acid ester unit (B) which is a flexible component.

Examples of the block copolymer include a diblock copolymer (A-B), a triblock copolymer (A-B-A), and a tetrablock copolymer (A-B-A-B) and a triblock copolymer (A-B-A) is preferable in order to impart flexibility to a flux residue, which is a cured product.

Examples of the methacrylic acid ester unit (A) which is a rigid component include methyl methacrylate, ethyl methacrylate, n-propyl methacrylate, and isopropyl methacrylate. Among these, in a case where methyl methacrylate, t-butyl methacrylate, or methacrylic acid having a glass transition temperature of 100°C or higher is used, high aggregating properties are exhibited and accordingly, the flux residue can retain an excellent strength, which is preferable.

Examples of the acrylic acid ester unit (B) which is a flexible component include methyl acrylate, ethyl acrylate, n-propyl acrylate, n-butyl acrylate, isobutyl acrylate, sec-butyl acrylate, tert-butyl acrylate, and n-hexyl acrylate. Among these, in a case where n-propyl acrylate, n-butyl acrylate, or n-hexyl acrylate having a glass transition temperature of -40°C or lower and configured of a linear alkyl moiety having 3 to 6 carbon atoms is used, it is possible to impart flexibility to the flux residue, which is preferable.

In particular, the n-butyl acrylate is commercially available at a low price and preferable, since a pseudo crosslinking point of (A) and (B) is unlikely to be collapsed and the flux has an excellent durability.

The content of the methacrylic acid ester unit (A) with respect to the total 100% by weight of the synthetic resin is preferably in the range from 20% by weight to 50% by weight, and the content of the acrylic acid ester unit (B) with respect to the total 100% by weight of the synthetic resin is preferably in the range from 50% by weight to 80% by weight. In a case where the content is within this range, the strength of the flux residue is retained and appropriate flexibility is imparted, which is preferable.

The content of the methacrylic acid ester unit (A) with respect to the total 100% by weight of the synthetic resin is more preferably in the range from 20% by weight to 40% by weight, and the content of the acrylic acid ester unit (B) with respect to the total 100% by weight of the synthetic resin is more preferably in the range from 60% by weight to 80% by weight. In a case where the content is within this range, it is considered that in a triblock copolymer within the flux residue, a micro-phase separated structure with enhanced fracture toughness is formed. Accordingly, reliability which is demanded for vehicle-mounted goods in contact with an automobile engine as described below can be secured.

In a case where the content of the methacrylic acid ester unit (A) is less than 20% by weight, since the rigid component is reduced, the strength of the flux residue is decreased and reliability cannot be secured for a long period of time. Meanwhile, in a case where the content of the methacrylic acid ester unit (A) is greater than 50% by weight, the strength of the flux residue is increased, but the flexible component is decreased. Thus, a crack is generated as a repetitive stress is applied from the circuit board in a heating cycle.

In a case where the content of the acrylic acid ester unit (B) is less than 50% by weight, since the flexible component is reduced, the flexibility of the flux residue is decreased and a crack is generated as a thermal stress applied from the circuit board in a heating cycle. Meanwhile, in a case where the content of the acrylic acid ester unit (B) is greater than 80% by weight, the flux residue has flexibility but the rigid component is reduced. Thus, the strength of the flux residue is decreased.

### (Activator)

As an activator used for the flux for soldering of the present invention, an organic acid such as an adipic acid, a stearic acid, and an abietic acid; and an amine-halogenated hydroacid salt such as 1,3-diphenyl guanidine hydrobromide can be used.

Among the activators, in order to retain an active force in a solder melting temperature region, an organic acid such as an adipic acid, a stearic acid, and an abietic acid; and an amine-halogenated hydroacid salt such as 1,3-diphenyl guanidine hydrobromide are preferably mixed to be used.

The blending ratio of such an activator is preferably from 1.5% by weight to 2.5% by weight with respect to the total amount of the flux for soldering. In a case where the blending ratio is less than 1.5% by weight, an effect of removing the circuit board electrode or metal oxides of the solder is decreased and wettability of the solder is decreased. Meanwhile, in a case where the blending ratio is greater than 2.5% by weight, the circuit board electrode or metal oxides of the solder is removed but a great effect caused by increasing the activator is not found.

Therefore, if the blending ratio is within the aforementioned range, wettability of the solder can be retained, which is preferable.

### (Organic solvent)

Examples of the organic solvent include glycol ethers such as diethylene glycol monoethyl ether (ethyl glycol), diethylene glycol mono 2-ethyl hexyl ether (hexyl diglycol), diethylene glycol mono 2-ethyl hexyl ether (2-ethyl hexyl diglycol), and ethylene glycol mono-n-butyl ether. In addition, alcohols such as n-propanol, 2-ethyl-1,3-hexane diol, and 2,2-dimethyl-1,3-propane diol are exemplified.

In order to secure an optimal continuous printing performance, the glycol ethers such as diethylene glycol monoethyl ether (ethyl glycol), diethylene glycol mono 2-ethyl hexyl ether (hexyl diglycol), diethylene glycol mono 2-ethyl hexyl ether (2 ethyl hexyl diglycol), and ethylene glycol mono-n-butyl ether, whose boiling point is in the range from 200°C to 280°C are desirably used.

The blending ratio of the organic solvent is preferably from 65% by weight to 80% by weight with respect to the total amount of the flux for soldering. In a case where the blending ratio is less than 65% by weight, it is difficult to sufficiently dissolve the synthetic resin. Meanwhile, in a case where the blending ratio is greater than 80% by weight, appropriate viscosity may not be imparted to the flux for soldering.

Therefore, if the blending ratio is within the aforementioned range, the resin component can be sufficiently dissolved and appropriate viscosity at the time of printing can be imparted to the flux for soldering, which is preferable.

### (Thixotropic agent)

Examples of the thixotropic agent used for the flux for soldering of the present invention includes a hydrogenated castor oil such as a castor wax and a gelating agent such as 1,3:2,4-bis-O-(4-methyl benzylidene)-D-sorbitol, but the thixotropic agent is not limited thereto.

In general, the blending ratio of the thixotropic agent is preferably from 2% by weight to 8% by weight with respect to the total amount of the flux for soldering. In a case where the blending ratio is less than 2% by weight, since the flux is loosened after a soldering paste is printed on the circuit board electrode, the shape cannot be retained and the flux is bridged with the adjacent soldering paste on the circuit board electrode, which is not appropriate.

Meanwhile, in a case where the blending ratio is greater than 8% by weight, the viscosity of the soldering paste changes over time and the soldering paste is thickened, which is not preferable. In a case where the blending ratio is not within the aforementioned range, thixotropy is not appropriately retained and printing properties of the soldering paste composition to the circuit board electrode are deteriorated.

Therefore, if the blending ratio is within the aforementioned range, satisfactory thixotropy can be imparted to the soldering paste composition at the time of printing, which is preferable.

Next, the soldering paste composition of the present invention will be described in detail using an embodiment. The soldering paste composition of the present invention is configured to include the aforementioned flux for soldering and a solder alloy powder.

### (Solder alloy powder)

As a solder alloy powder, a lead-free solder alloy powder is known. For example, a Sn-Cu- based alloy powder, a Sn-Ag-Cu-based alloy powder, or a Sn-Ag-Bi-In-Cu-based alloy powder is used. The particle diameter of the solder alloy powder is not particularly limited, and for example, the particle diameter is preferably about 10 to 45 µm so as to be able to correspond to be mounted on a small-sized electronic component.

In a case where the particle diameter is less than 10 µm, since the surface area of the solder alloy powder is large, the oxidation ratio is increased, wettability is deteriorated, or a solder ball is highly possibly generated, which is not preferable. In a case where the particle diameter is larger than 45 µm, a sufficient solder amount cannot be secured on the circuit board and mounting in a narrow pitch is difficult, which is not appropriate.

The solder alloy powder is preferably from 85% by weight to 92% by weight with respect to the total amount of the soldering paste composition. In a case where the solder alloy powder is less than 85% by weight, the obtained solder alloy powder in the soldering paste composition is decreased, and accordingly, a sufficient joining strength cannot be obtained at the time of soldering. Meanwhile, in a case where the solder alloy powder is greater than 92% by weight, the flux in the soldering paste composition is decreased, and accordingly it is difficult to sufficiently mix the flux with the solder alloy powder. However, the solder alloy powder is not particularly limited in consideration of a different purpose.

### (Examples)

Examples 1 to 7 of the present invention will be described in combination with Comparative Examples 1 to 9.

Table 1 shows 16 types of the synthetic resins in which the methacrylic acid ester unit (A) and the acrylic acid ester unit (B) are combined with each other by changing the type and the ratio thereof, when the total amount of the synthetic resin is set to 100% by weight.

### (Example 1)

### (Synthetic resin)

As shown in Table 1, when the total amount of the synthetic resin is set to 100% by weight, a triblock copolymer (A-B-A) including 20% by weight of the methyl methacrylate, which is a methacrylic acid ester unit (A), and 80% by weight of n-butyl acrylate, which is an acrylic acid ester unit (B), was selected as a synthetic resin 1.

**[Table 1]**

| Synthetic resin (% by weight) | | Synthetic resin 1 | Synthetic resin 2 | Synthetic resin 3 | Synthetic resin 4 | Synthetic resin 5 | Synthetic resin 6 | Synthetic resin 7 | Synthetic resin 8 | Synthetic resin 9 | Synthetic resin 10 | Synthetic resin 11 | Synthetic resin 12 | Synthetic resin 13 | Synthetic resin 14 | Synthetic resin 15 | Synthetic resin 16 |
|---|---|---|---|---|---|---|---|---|---|---|---|---|---|---|---|---|---|
| Methacrylic acid ester unit (A) | Methyl methacrylate | 20 | 40 | | | 50 | 30 | 40 | 10 | 60 | 100 | | | 35 | 35 | 35 | 35 |
| | t-butyl methacrylate | | | 40 | | | | | | | | | | | | | |
| | Methacrylic acid | | | | 40 | | | | | | | | | | | | |
| | Propyl methacrylate | | | | | | | | | | | | 35 | | | | |
| Acrylic acid ester unit (B) | Ethyl acrylate | | | | | | | | | | | | | 65 | | | |
| | n-propyl acrylate | | | | | | 70 | | | | | | | | | | |
| | n-butyl acrylate | 80 | 60 | 60 | 60 | 50 | | | 90 | 40 | | 100 | 65 | | | 65 | 65 |
| | n-hexyl acrylate | | | | | | | 60 | | | | | | | | | |
| | Cyclohexyl acrylate | | | | | | | | | | | | | | 65 | | |
| *Polymerization state | | TB | TB | TB | TB | TB | TB | TB | TB | TB | | | TB | TB | TB | | DB |

| | | | | | | | | | | | | | | | | | |
|---|---|---|---|---|---|---|---|---|---|---|---|---|---|---|---|---|---|
| *Polymerization state No description: monomer, DB: diblock copolymer (A-B), TB: triblock copolymer (A-B-A) | | | | | | | | | | | | | | | | | |

With regard to the lowermost column of Table 1 (*polyemerization state), it is represented that no description: monomer, DB: diblock copolymer (A-B), and TB: triblock copolymer (A-B-A).

Table 2 shows 16 types of the flux for soldering produced by changing the type and the ratio of the synthetic resin and the ratio of the organic solvent and the thixotropic agent, when the total amount of the synthetic resin, the organic solvent, the activator, and the thixotropic agent configuring the flux for soldering is set to 100% by weight. Among these, 7 types were used as Examples 1 to 7 and the rest 9 types were used as Comparative Examples 1 to 9.

### (Production of flux for soldering)

The materials shown below were weighed so as to be blended as shown in Table 2.

### Synthetic resin: 21.0% by weight of the synthetic resin 1

Organic solvent: 70.9% by weight of diethylene glycol mono-2-ethyl hexyl ether
Activator: 1.5% by weight of stearic acid, 0.2% by weight of adipic acid, and 0.4% by weight of 1,3-diphenyl guanidine hydrobromic acid
Thixotropic agent: 2.0% by weight of hydrogenated castor oil, and 4.0% by weight of 1,3:2,4-bis-O-(4-methyl benzylidene)-D-sorbitol

The weighed respective materials were put into a measuring flask in order to suppress volatilization of an organic solvent or the like at the time of mixing and mixed at a stirring rate of 150 to 200 rpm using a stirring rod so as to be produced. The heating temperature at the time of producing the flux for soldering was adjusted to 100°C at which the synthetic resin, the activator, or the thixotropic agent can be dissolved in the organic solvent sufficiently. The dissolution time differs depending on the production amount of the flux for soldering but was adjusted to about 3 hours as one example in order to dissolve respective materials sufficiently.

**[Table 2]**

| Flux for soldering (% by weight) | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| | Synthetic resin 1 | 21.0 | | | | | | | | | | | | | | | |
| | Synthetic resin 2 | | 25.0 | | | | | | | | | | | | | | |
| | Synthetic resin 3 | | | 17.2 | | | | | | | | | | | | | |
| | Synthetic resin 4 | | | | 20.0 | | | | | | | | | | | | |
| | Synthetic resin 5 | | | | | 15.0 | | | | | | | | | | | |
| | Synthetic resin 6 | | | | | | 17.9 | | | | | | | | | | |
| | Synthetic resin 7 | | | | | | | 20.1 | | | | | | | | | |
| | Synthetic resin 8 | | | | | | | | 25.9 | | | | | | | | |
| Synthetic resin | Synthetic resin 9 | | | | | | | | | 17.6 | | | | | | | |
| | Synthetic resin 10 | | | | | | | | | | 23.9 | | | | | | |
| | Synthetic resin 11 | | | | | | | | | | | 17.0 | | | | | |
| | Synthetic resin 12 | | | | | | | | | | | | 23.4 | | | | |
| | Synthetic resin 13 | | | | | | | | | | | | | 19.3 | | | |
| | Synthetic resin 14 | | | | | | | | | | | | | | 24.9 | | |
| | Synthetic resin 15 | | | | | | | | | | | | | | | 22.0 | |
| | Synthetic resin 16 | | | | | | | | | | | | | | | | 21.0 |
| Organic solvent | Diethylene glycol mono-2-ethylhexyl ether | 70.9 | 66.9 | 77.7 | 74.4 | 76.9 | 78.0 | 72.3 | 68.5 | 73.8 | 67.0 | 75.4 | 70.0 | 71.6 | 68.5 | 69.9 | 70.9 |
| Activator | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Adipic acid | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | 1,3-diphenyl guanidine hydrobromide | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| Thixotropic agent | Hydrogenated castor oil | 2.0 | 3.0 | 4.0 | 1.0 | 1.5 | 1.0 | 1.5 | 2.0 | 2.5 | 3.5 | 4.5 | 2.0 | 3.0 | 1.0 | 2.0 | 2.0 |
| | 1,3:2,4-bis-O-(4-methyl benzylidene)-D-sorbitol | 4.0 | 3.0 | 2.0 | 2.0 | 2.0 | 1.0 | 4.0 | 1.5 | 4.0 | 3.5 | 1.0 | 2.5 | 4.0 | 3.5 | 4.0 | 4.0 |

### (Production of soldering paste composition)

The total amount of the paste composition for soldering in which the flux for soldering and the solder alloy powder are combined with each other is set to 100% by weight.

First, each flux for soldering shown in Table 2 is prepared in the amount of 10.1% by weight. Meanwhile, when the entire element composition included in the solder alloy powder is set to 100% by weight, 89.9% by weight of a lead-free solder alloy powder configured to include, in terms of ratio, 89.3% by weight of Sn, 3.5% by weight of Ag, 0.5% by weight of Bi, 5.9% by weight of In, and 0.8% by weight of Cu is prepared. The above elements were put into a plastic container and mixed by stirring so as to be uniform to produce the lead-free solder alloy powder. The lead-free solder alloy powder was produced by a centrifugal atomization method and a powder having a particle diameter in the range of 20 to 38 µm was used.

### (Examples 2 to 7 and Comparative Examples 1 to 9)

Each soldering paste composition was obtained in the same manner as Example 1 by combining the respective flux for soldering shown in Table 2 with the solder alloy powder.

### (Evaluation of presence or absence of crack on flux residue)

The presence or absence of a crack in the flux residue was evaluated using the soldering paste compositions obtained in respective Examples and Comparative Examples. The presence or absence of a crack in the flux residue was evaluated according to the following method.

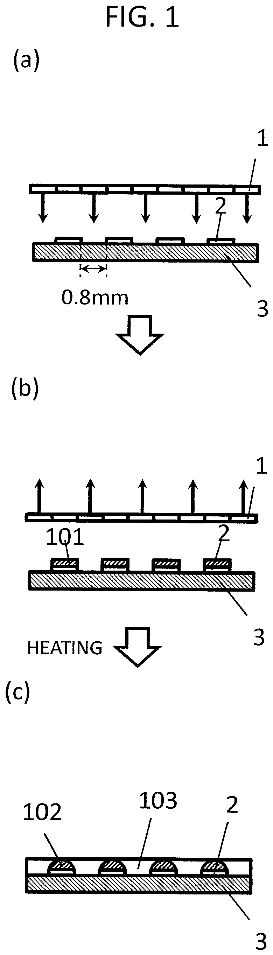

FIG. 1 illustrates a step of supplying a soldering paste composition to a circuit board electrode and heating the composition within a reflow oven. 1 represents a screen mask, 2 represents a circuit board electrode, 3 represents circuit board, 101 represents a soldering paste composition, 102 represents a solder, and 103 represents a flux residue. Produced soldering paste composition 101 was printed on circuit board 3 in which a pattern of 0.8 mm pitches exists using screen mask 1 having the same pattern and thickness of 200 µm.

Within 10 minutes after printing, the circuit board was heated up to the highest temperature of about 240°C using a reflow oven. A cycle, in which a board is put into a reliability test chamber and cooled at a temperature of -40°C for 30 minutes, and then heated at a temperature of 150°C for 30 minutes, is set as one cycle, and a load of cooling and heating cycle was applied to this board under a condition of 2000 cycles to 3000 cycles. A component which demands 2000 cycles or more as a required specification is vehicle-mounted goods used within an engine room of automobiles.

Among these, in particular, for the vehicle-mounted goods in contact with an engine of automobiles, 3000 cycles or more are demanded. After each cycle is completed, a state where a crack of flux residue 103 is generated in a soldered portion of the pattern on the board was visually observed and evaluated in accordance with the following criteria.

β: A crack is not generated at all in the flux residue.
γ: A crack is generated in the flux residue.

The evaluation result with regard to the presence or absence of a crack in the flux residue is shown in Table 3.

**[Table 3]**

| Presence or absence of crack in flux residue | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|
| After 2000 cycles | β | β | β | β | β | β | β | γ | γ | γ | γ | γ | γ | γ | γ | γ |
| After 3000 cycles | β | β | β | β | γ | β | β | γ | γ | γ | γ | γ | γ | γ | γ | γ |

The result obtained by comprehensively evaluating a crack in the flux residue after 2000 cycles and 3000 cycles is shown in Table 4. Respective Examples and Comparative Examples are determined in accordance with the following criteria.

α: Applicable to vehicle-mounted goods in contact with an automobile engine
β: Applicable to a vehicle-mounted goods within an engine room of automobiles
γ: Unable to be applicable to vehicle-mounted goods within an engine room of automobiles

**[Table 4]**

| Comprehensive Evaluation | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|
| Determination | α | α | α | α | β | α | α | γ | γ | γ | γ | γ | γ | γ | γ | γ |

After 2000 cycles, in Examples 1 to 7, a crack is not generated in the flux residue, but in Comparative Examples 1 to 9, a crack is generated in the flux residue. Accordingly, the soldering paste composition used in Examples 1 to 7 can be applied to vehicle-mounted goods used within an engine room.

After 3000 cycles, in Examples 1, 2, 4, 5, 6, and 7, a crack was not generated in the flux residue, but in Example 3, a crack was generated. In Comparative Example 1 to 9, a crack was generated in the same manner as after 2000 cycles. Accordingly, the soldering paste composition used in Examples 1, 2, 4, 5, 6, and 7 can be applied to vehicle-mounted goods in contact with an engine.

In Example 1, when the total amount of the synthetic resin is set to 100% by weight, a flux for soldering was used, which was produced by using a triblock copolymer, which has the content of methyl methacrylate of 20% by weight as the methacrylic acid ester unit (A) and the content of n-butyl acrylate of 80% by weight as the acrylic acid ester unit (B), as the synthetic resin.

In Example 2, when the total amount of the synthetic resin is set to 100% by weight, a flux for soldering was used, which was produced by using a triblock copolymer, which has the content of methyl methacrylate of 40% by weight as the methacrylic acid ester unit (A) and the content of n-butyl acrylate of 60% by weight as the acrylic acid ester unit (B), as the synthetic resin.

In the triblock copolymer of the synthetic resin used in the present invention, the acrylic acid ester unit (B) exists in the center and the methacrylic acid ester unit (A) exists at both terminals of a polymer chain. In the present invention, methyl methacrylate which is likely to be aggregated and has a glass transition point of 100°C or higher is used as the methacrylic acid ester unit (A), the polymer chain forms a network uniformly within the flux residue. Therefore, since methyl methacrylate having rigidity and the acrylic acid ester unit (B) having flexibility can be dispersed uniformly within the flux residue, a crack of the flux residue can be suppressed.

In a case where the ratio of the triblock copolymer included in the synthetic resin is as in Example 1 to 2, a stress repetitively applied under a severe cooling and heating cycle, which is from -40°C to 150°C can be absorbed, and it is considered that a crack was not generated in the flux residue, since a micro-phase separated structure with enhanced fracture toughness is formed in the flux residue.

In Example 3, when the total amount of the synthetic resin is set to 100% by weight, a flux for soldering was used, which was produced by using a triblock copolymer, which has the content of t-butyl methacrylate of 40% by weight as the methacrylic acid ester unit (A) and the content of n-butyl acrylate of 60% by weight as the acrylic acid ester unit (B), as the synthetic resin.

In Example 4, when the total amount of the synthetic resin is set to 100% by weight, a flux for soldering was used, which was produced by using a triblock copolymer, which has the content of methacrylic acid of 40% by weight as the methacrylic acid ester unit (A) and the content of n-butyl acrylate of 60% by weight as the acrylic acid ester unit (B), as the synthetic resin.

It is considered that since the aforementioned methacryl t-butyl or methacrylic acid has a glass transition point of 100°C or higher and has the same properties as the methyl methacrylate, a crack was not generated in the flux residue.

In Example 5, when the total amount of the synthetic resin is set to 100% by weight, a flux for soldering was used, which was produced by using a triblock copolymer, which has the content of methyl methacrylate of 50% by weight as the methacrylic acid ester unit (A) and the content of n-butyl acrylate of 50% by weight as the acrylic acid ester unit (B), as the synthetic resin.

Under this condition, it is considered that a part of the flux residue forms a micro-phase separated structure, fracture toughness of the flux residue is decreased compared to Examples 1 and 2. Accordingly, after 2000 cycles, a crack was not generated in the flux residue, but after 3000 cycles, it is considered that a crack is generated in the flux residue.

In Example 6, when the total amount of the synthetic resin is set to 100% by weight, a flux for soldering was used, which was produced by using a triblock copolymer, which has the content of methyl methacrylate of 30% by weight as the methacrylic acid ester unit (A) and the content of n-propyl acrylate of 70% by weight as the acrylic acid ester unit (B), as the synthetic resin.

In Example 7, when the total amount of the synthetic resin is set to 100% by weight, a flux for soldering was used, which was produced by using a triblock copolymer, which has the content of methyl methacrylate of 40% by weight as the methacrylic acid ester unit (A) and the content of n-hexyl acrylate of 60% by weight as the acrylic acid ester unit (B), as the synthetic resin.

In Examples 6 and 7, since an acrylic acid ester unit configured of a linear alkyl moiety having 5 and 6 carbon atoms is used, a glass transition temperature becomes -40°C or lower. Accordingly, a crack can be suppressed at low temperature under a cooling and heating cycle.

Meanwhile, in Comparative Example 1, when the total amount of the synthetic resin is set to 100% by weight, the content of methyl methacrylate is 10% by weight and a rigid part is reduced. Accordingly, a tiny crack is generated after 2000 cycles and it is considered that after 3000 cycles, a crack is greatly developed.

In Comparative Example 2, when the total amount of the synthetic resin is set to 100% by weight, the content of methyl methacrylate is 60% by weight and the strength of the flux residue itself is increased, but a reduction of the acrylic acid ester unit (B) decreases flexibility of the flux residue. Thus, it is considered that a crack is generated since the flux residue cannot bear a thermal stress to be applied by 3000 cycles.

In Comparative Examples 3 and 4, since each of the flexible component and the rigid component do not coexist within the synthetic resin, a crack is generated in the flux residue.

In Comparative Example 5, a synthetic resin in which methyl methacrylate is changed to n-propyl methacrylate as the methacrylic acid ester unit (A) is used, but since n-propyl methacrylate has an aggregating force weaker than that of methyl methacrylate, an excellent strength cannot be exhibited in the flux residue.

In Comparative Examples 6 and 7, methyl acrylate configured of an alkyl moiety having other than 3 to 6 carbon atoms as the acrylic acid ester unit (B) and cyclohexyl acrylate in which an alkyl moiety is not linear but cyclic are used as the synthetic resin. However, a glass transition point is increased and accordingly a crack is generated at low temperature.

In addition, since it is difficult for the flux residue to exhibit excellent flexibility, it is desirable to use acrylic acid ester configured of a linear alkyl moiety having 3 to 6 carbon atoms.

In Comparative Examples 8 and 9, not a triblock copolymer but a monomer and a diblock copolymer are used as the synthetic resin, but in a case of a monomer, a diblock copolymer, or a tetrablock copolymer, the methacrylic acid ester unit (A) exists only at a single terminal of a polymer chain. Accordingly, since a partial network is formed within the flux residue, a crack may be generated depending on the spot of the flux residue. Therefore, it is considered that a crack is generated in the flux residue, since the rigid component and the flexible component cannot be dispersed in the flux residue.

Accordingly, according to the flux for soldering and the soldering paste composition including the flux for soldering of the present invention, even if a circuit board mounted with an electronic component is exposed to a cooling and heating cycle for a long period of time, the resistance of flux residue itself against thermal expansion or contraction is excellent and accordingly a crack in the flux residue can be suppressed.

The present invention is not limited to these Examples.

### INDUSTRIAL APPLICABILITY

The flux for soldering and the soldering paste composition of the present invention can suppress a crack in the flux residue even if the flux for soldering and the soldering paste composition are placed in a severe environment, which is from -40°C to 150°C, such as an engine room, and is useful to be used for a mounting structure of electric equipment of automobiles, which demands electrical conductivity to be secured for a long period of time.

### REFERENCE MARKS IN THE DRAWINGS

3 Circuit board
4,101 Soldering paste composition
5 Squeegee
6 Electronic component
7,103 Flux residue
8 Solder
9 Crack

## Claims

1. A flux for soldering, comprising:
a synthetic resin;
an activator;
an organic solvent; and
a thixotropic agent,
wherein the synthetic resin has methacrylic acid ester having a glass transition point of 100°C or higher, and contains a triblock copolymer with acrylic acid ester configured of a linear alkyl moiety having 3 to 6 carbon atoms.

2. The flux for soldering of Claim 1,
wherein the methacrylic acid ester includes methyl methacrylate.

3. The flux for soldering of Claim 1,
wherein the methacrylic acid ester includes t-butyl methacrylate.

4. The flux for soldering of Claim 1,
wherein the methacrylic acid ester includes methacrylic acid.

5. The flux for soldering of Claim 1,
wherein when an amount of the synthetic resin is 100% by weight, a ratio of the methacrylic acid ester to the acrylic acid ester is in a range from 20% by weight: 80% by weight to 50% by weight: 50% by weight.

6. The flux for soldering of Claim 1,
wherein when an amount of the synthetic resin is 100% by weight, a ratio of the methacrylic acid ester to the acrylic acid ester is in a range from 20% by weight: 80% by weight to 40% by weight: 60% by weight.

7. The flux for soldering of Claim 1,
wherein the acrylic acid ester includes n-butyl acrylate.

8. A soldering paste composition comprising the flux for soldering of any one of Claims 1 to 4 and a solder alloy powder.
